Europäisches Patentamt

(19) European Patent Office

Office européen des brevets

(11) Numéro de publication : **0 155 712**
**B1**

(12) **FASCICULE DE BREVET EUROPÉEN**

(45) Date de publication du fascicule du brevet :
09.09.87

(51) Int. Cl.⁴ : **D 21 F   1/00,** D 03 D  11/00

(21) Numéro de dépôt : **85200143.7**

(22) Date de dépôt : **08.02.85**

(54) Toile destinée en particulier aux machines à papier, et son procédé de préparation.

(30) Priorité : **29.02.84 FR 8403144**

(43) Date de publication de la demande :
**25.09.85 Bulletin 85/39**

(45) Mention de la délivrance du brevet :
**09.09.87 Bulletin 87/37**

(84) Etats contractants désignés :
**AT BE CH DE GB IT LI NL SE**

(56) Documents cités :
**EP-A- 0 036 527**
**EP-A- 0 097 966**
**FR-A- 2 407 291**
**US-A- 2 269 869**
**US-A- 2 316 818**

(73) Titulaire : **v. Asten, Fabrique de Feutres pour Papete-ries, société cooperative**
**Buschberg**
**Eupen (Kettenis) (BE)**

(72) Inventeur : **Malmendier, Joseph**
**Rosenweg, 21**
**B-4700 Eupen (BE)**

(74) Mandataire : **Claeys, Pierre et al**
**Bureau Gevers 7, rue de Livourne Bte I**
**B-1050 Bruxelles (BE)**

## Description

La présente invention est relative à une toile, en particulier à un tissu ou feutre pour l'égouttage et le séchage de bandes de papier dans des machines à papier, comprenant des fils de chaîne et des fils de trame tissés entre eux de manière à former un tissu à une couche ou à couches multiples, ainsi qu'au procédé de préparation d'une telle toile.

On connaît depuis longtemps déjà des toiles destinées au séchage de bandes de papier dans des machines à papier. La bande de papier humide est amenée à circuler sur des tambours de séchage, sur lesquels elle est pressée par l'intermédiaire d'une toile de séchage. Des exemples de toiles de séchage comprenant des fils de chaîne et des fils de trame tissés entre eux de manière à former un tissu à une couche ou à couches multiples sont décrits par exemple dans W. Kufferath, Bindungssysteme von Papiermaschinensieben, Wochenblatt für Papierfabrikation 5, 1982, p. 139 à 152.

Un problème important des toiles de séchage consiste à présenter une surface de pressage à appliquer sur la bande de papier qui soit aussi grande et aussi lisse que possible, pour améliorer les conditions de séchage de la bande de papier et ne pas permettre à la toile de laisser des traces imprimées dans la bande de papier séchée.

On a cherché à résoudre ces problèmes en utilisant dans la toile des fils de chaîne à section, non pas circulaire, mais au contraire rectangulaire (v. par exemple US-A-4 290 209, EP-A-0 036 527, ou la toile de marque Planet, mise en vente par la firme allemande Thomas Joseph Heimbach GmbH & Co). Ces toiles, même si elles présentent une surface de contact agrandie par rapport aux toiles courantes, ne résolvent pas les problèmes posés d'une manière totalement satisfaisante.

Pour résoudre ces problèmes, on a prévu suivant l'invention une toile, telle que décrite au début, et caractérisée en ce qu'elle comprend en outre une couche supérieure formée de rubans longitudinaux et de fils de trame supérieurs entrelacés et en ce qu'au moins une partie de fil de trame supérieur passant en dessous d'un ou de plusieurs rubans longitudinaux est reliée au tissu précité par au moins un fil de chaîne de ce dernier, passé entre ladite partie de fil de trame supérieur et le ou lesdits rubans longitudinaux.

Suivant une forme de réalisation avantageuse de l'invention, les rubans longitudinaux sont disposés côte à côte, de manière à recouvrir la quasi totalité de la surface du tissu.

Suivant une forme de réalisation préférée de l'invention, les fils de trame supérieurs ont une forme aplatie, de préférence de section rectangulaire.

Il est prévu, suivant l'invention, un procédé de préparation d'une toile de ce genre, ce procédé comprenant la formation d'un tissu à une couche ou à couches multiples par tissage de fils de chaîne et de fils de trame et étant caractérisé en ce qu'il comprend la formation simultanée, au-dessus du tissu susdit, d'une couche supérieure par entrelacement de rubans longitudinaux et de fils de trame supérieurs et, au cours de l'insertion de chaque fil de trame supérieur, le passage de celui-ci en dessous d'au moins un fil de chaîne du tissu susdit.

D'autres détails et particularités de l'invention ressortiront de la description, donnée ci-après à titre non limitatif et avec référence aux dessins annexés.

La figure 1 représente une vue en perspective d'un fragment de toile suivant l'invention.

Les figures 2 à 4 représentent des vues en coupe longitudinale de différentes formes de réalisation de toile suivant l'invention, la figure 4 étant la vue en coupe de la forme de réalisation représentée sur la figure 1.

Les figures 5 à 7 et 8a, 8b, 9a et 9b représentent des vues en section transversale suivant les lignes V-V, VI-VI, VII-VII, VIII-VIII et respectivement IX-IX, de la figure 2.

Sur les différentes figures, les éléments identiques ou analogues sont désignés par les mêmes références.

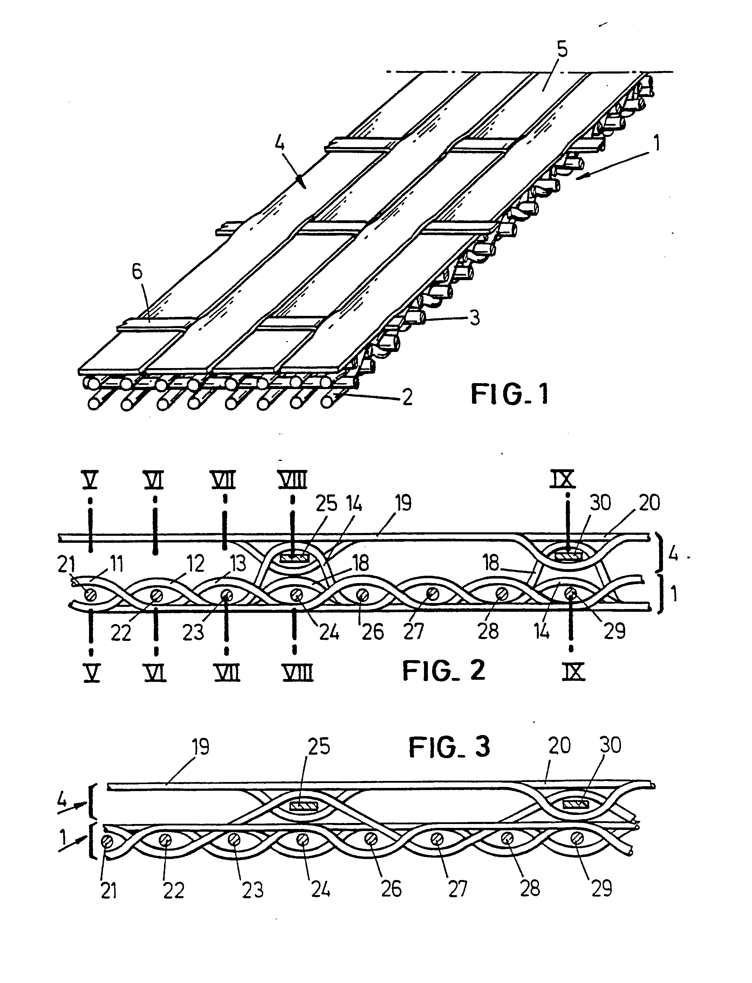

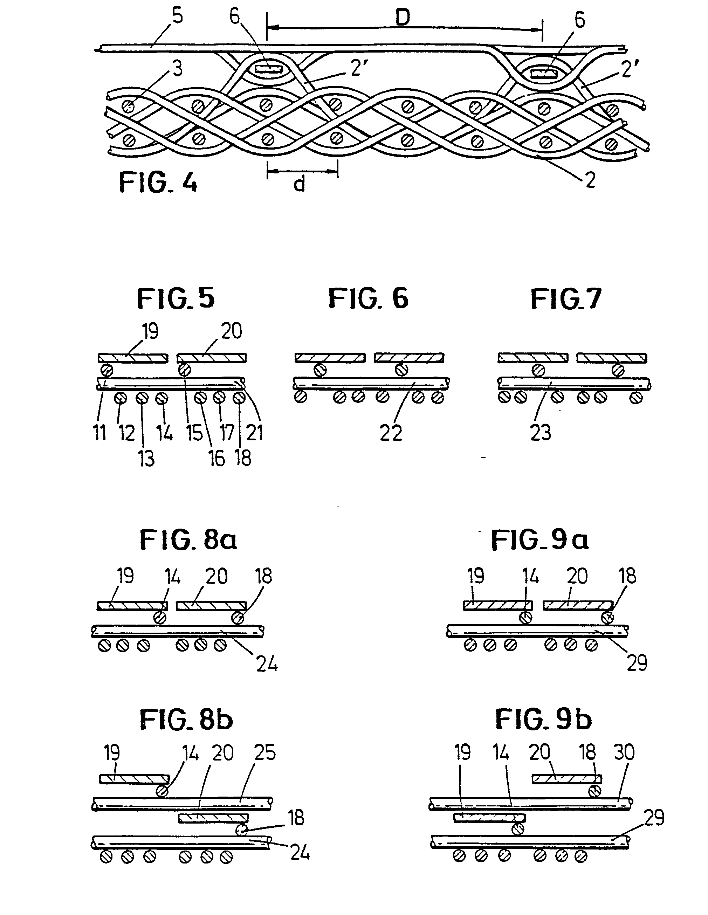

La toile représentée sur les figures 1 et 4 comprend un tissu double 1 formé de fils de chaîne 2 et de fils de trame 3 entrelacés d'une manière courante. Ces fils sont en une matière connue et présentent des propriétés et paramètres qui sont courants pour les toiles de séchage de bandes de papier et connus du spécialiste.

Cette toile comprend en outre une couche supérieure 4 formée de rubans longitudinaux 5 et de fils de trame 6, que l'on désigne dans ce mémoire descriptif par fils de trame supérieurs.

Dans l'exemple de réalisation illustré sur les figures 1 et 4, les rubans longitudinaux sont agencés côte à côte de telle manière qu'ils recouvrent la quasi totalité de la surface du tissu 1. La distance D entre les fils de trame supérieurs 6 est plus grande que la distance d entre les fils de trame 3 du tissu 1. Chaque fil de trame supérieur 6 passe alternativement au-dessus et en dessous des rubans longitudinaux 5 successifs.

Chaque partie de fil de trame supérieur 6 passant par-dessous un ruban longitudinal 5 passe simultanément en dessous d'un des fils de chaîne 2 du tissu 1, ces fils de chaîne étant désignés sur la figure 4 par la référence 2'. Ce sont ces fils de chaîne qui maintiennent la couche supérieure 4 reliée au tissu double 1.

Les rubans longitudinaux 5 sont faits à partir de toute matière appropriée pour les toiles de séchage, et connue du spécialiste. On peut notamment utiliser une matière thermoplastique. La largeur des rubans n'est pas critique, mais il est préférable qu'elle ait au minimum une largeur supérieure à la somme de l'épaisseur de deux fils de chaîne adjacents et de leur écartement mutuel. Ces rubans peuvent à titre d'exemple présenter une largeur d'environ 2,5 mm et une épaisseur d'environ 0,1 mm.

Les fils de trame supérieurs 6 sont dans l'exemple de réalisation illustré sur les figures 1 et 4 différents des fils de trame 3 du tissu double 1. Ils peuvent cependant être de nature ou de forme identique, et donc présenter aussi une section circulaire. Toutefois, on prévoit de préférence l'usage de fils de trame supérieurs à section aplatie, par exemple rectangulaire.

Sur les figures 2 et 3 sont représentées en coupe longitudinale deux autres formes de réalisation de toile suivant l'invention. Ces formes de réalisation se distinguent de celle représentée sur la figure 1 par le fait que le tissu de support 1 est un tissu à une couche et non plus un tissu double.

Pour des raisons de simplicité de description, on fera référence aux figures 5 à 7 et 8a, 8b, 9a et 9b, pour expliquer le procédé de préparation d'une toile suivant l'invention, ces figures étant des vues en section de la toile suivant la figure 2 après l'introduction de chaque fil de trame successif. Il ressort de ces figures que le tissu de support 1 est formé par un tissage courant de fils de chaîne dont huit sont ici représentés (fils 11 à 18) et qui sont déplacés entre des positions haute et basse à des cadences déterminées de manière à former une foule, appelée dans la suite foule inférieure. Quatre fils de chaîne adjacents sont recouverts par un seul ruban longitudinal et donc seuls deux rubans longitudinaux 19 et 20 sont représentés. Ils forment une chaîne supérieure recouvrant le tissu de support 1.

Pendant quatre pas successifs, un fil de trame inférieur 21, 22, 23 et respectivement 24 est passé à travers la foule inférieure, ainsi qu'il ressort des figures 5 à 8a, et les rubans longitudinaux 19 et 20 sont maintenus à même hauteur. La figure 8a représente une vue en section suivant la ligne VIII-VIII de la figure 2, après l'insertion du fil de trame inférieur 24, mais avant l'insertion du fil de trame supérieur 25.

Au pas suivant, représenté sur la figure 8b, les chaînes ne sont pas avancées, les rubans longitudinaux 19 et 20 sont écartés de manière à former une foule, appelée dans la suite foule supérieure, et, parmi les deux fils de chaîne 14 et 18 passant par-dessus le fil de trame inférieur 24, seul le fil de chaîne 14 est amené dans une position haute surélevée, telle que représentée sur cette figure 8b, c'est-à-dire juste en dessous du ruban longitudinal 19 situé en position haute. Un fil de trame supérieur 25 est alors passé à travers la foule supérieure ainsi formée, en passant donc en dessous du fil de chaîne 14 du tissu de support 1, mais en suivant un trajet situé dans un plan supérieur à celui suivi par les fils de trame 21 à 24.

Après fermeture de la foule supérieure par rapprochement des rubans longitudinaux 19 et 20, les quatre pas suivants sont identiques à ceux illustrés sur les figures 5 à 8a. On peut d'ailleurs voir que la position mutuelle des fils et rubans, au quatrième de ces pas suivants, illustré sur la figure 9a, est identique à ce qui est représenté sur la figure 8a. La figure 9a est une vue en section transversale, suivant la ligne IX-IX de la figure 2, après l'insertion du fil de trame inférieur 29, mais avant l'insertion du fil de trame supérieur 30. Au cours du pas suivant, illustré sur la figure 9b, les chaînes sont à nouveau arrêtées, les rubans longitudinaux 19 et 20 sont écartés en sens inverses de leur position illustrée sur la figure 8b et seul le fil de chaîne 18 est amené dans une position surélevée. Un fil de trame 30 est alors passé à travers la foule supérieure ainsi formée, en passant donc en dessous du fil de chaîne 18 du tissu de support 1, dans le même plan que le fil de trame 25.

La forme de réalisation suivant la figure 3 est très semblable à celle représentée sur la figure 2 et seuls les rythmes de passage entre les positions mutuelles hautes et basses des fils de chaîne sont différents.

Ainsi qu'il ressort des figures 2 et 3, les fils de trame supérieurs 25 et 30 présentent avantageusement une section de forme rectangulaire. Cela offre l'avantage de réduire au maximum la perte de surface de contact aux rares endroits, espacés, où les rubans longitudinaux passent en dessous des fils de trame supérieurs.

Les toiles suivant l'invention offrent, par rapport aux toiles connues, le grand avantage d'une augmentation considérable de la surface de contact potentielle entre la toile et la bande de papier. En effet, la présence d'une couche supérieure formée de larges rubans, disposés côte à côte, et entrelacés uniquement avec des fils de trame supérieurs propres à cette couche, de préférence eux-mêmes de section aplatie, et cela à intervalles relativement éloignés, garantit une surface de contact lisse, d'une étendue jamais atteinte. Par ailleurs, la liaison, réalisée par des fils de chaîne du tissu sous-jacent, entre ce tissu sous-jacent et les fils de trame supérieurs, assure à la toile une résistance mécanique et une capacité élevée de pressage de la bande de papier sur les tambours de séchage, sans altérer simultanément l'étendue de la surface de contact obtenue par la couche supérieure, et la forme lisse de celle-ci.

Il doit être entendu que la présente invention n'est en aucune façon limitée aux formes de réalisations décrites ci-dessus et que bien des modifications peuvent y être apportées sans sortir du cadre du présent brevet.

Pour le tissu de support, on peut utiliser par exemple, comme fils de trame et de chaîne, n'importe quels types de fil habituellement utilisés pour des toiles de séchage, et notamment des filés, des multifilaments, des monofilaments, des fils en fibres minérales ou des filés enrobés.

La ou les matières utilisées pour la fabrication des fils du tissu de support ou des fils et rubans de la couche supérieure peuvent être choisies parmi les matières habituellement utilisées pour des toiles de séchage, et dont certaines peuvent notamment être prélevées des publications antérieures citées au début de la présente description.

## Revendications

1. Toile, en particulier tissu ou feutre pour l'égouttage et le séchage de bandes de papier dans des machines à papier, comprenant des fils de chaîne (2 ; 11 à 18) et des fils de trame (3 ; 21 à 24 et 26 à 29) tissés entre eux de manière à former un tissu (1) à une couche ou à couches multiples, caractérisée en ce qu'elle comprend en outre une couche supérieure (4) formée de rubans longitudinaux (5 ; 19, 20) et de fils de trame supérieurs (6 ; 25, 30) entrelacés et en ce qu'au moins une partie de fil de trame supérieur (6 ; 25, 30) passant en dessous d'un ou de plusieurs rubans longitudinaux (5 ; 19, 20) est reliée au tissu précité (1) par au moins un fil de chaîne (2' ; 14, 18) de ce dernier, passé entre ladite partie de fil de trame supérieur et le ou lesdits rubans longitudinaux.

2. Toile suivant la revendication 1, caractérisée en ce que la distance (D) entre chaque fil de trame supérieur (6 ; 25, 30) est supérieure à celle (d) existant entre chaque fil de trame du tissu (1) susdit.

3. Toile suivant l'une ou l'autre des revendications 1 et 2, caractérisée en ce que les rubans longitudinaux (5 ; 19, 20) ont une largeur supérieure à au moins la somme de l'épaisseur de deux fils de chaîne (2 ; 11 à 18) adjacents et de leur écartement mutuel.

4. Toile suivant l'une quelconque des revendications 1 à 3, caractérisée en ce que les rubans longitudinaux (5 ; 19, 20) sont disposés côte à côte, de manière à recouvrir la quasi totalité de la surface du tissu (1).

5. Toile suivant l'une quelconque des revendications 1 à 4, caractérisée en ce que les fils de trame supérieurs (25, 30) ont une forme aplatie, de préférence de section rectangulaire.

6. Toile suivant l'une quelconque des revendications 1 à 5, caractérisée en ce que chaque partie de fil de trame supérieur (6 ; 25, 30) passant en dessous d'un ou de plusieurs rubans longitudinaux (5 ; 19, 20) est reliée au tissu précité (1) par un fil de chaîne (2' ; 14, 18) de ce dernier.

7. Procédé de préparation de toile suivant l'une quelconque des revendications 1 à 6, comprenant la formation d'un tissu (1) à une couche ou à couches multiples par tissage de fils de chaîne (2 ; 11-18) et de fils de trame (3 ; 21-24, 26-29), caractérisé en ce qu'il comprend la formation simultanée, au-dessus du tissu susdit, d'une couche supérieure (4) par entrelacement de rubans longitudinaux (5) et de fils de trame supérieurs (6) et, au cours de l'insertion de chaque fil de trame supérieur, le passage de celui-ci en dessous d'au moins un fil de chaîne (2) du tissu susdit.

8. Procédé de préparation de toile suivant la revendication 7, caractérisé en ce qu'il comprend la formation d'une chaîne supérieure de rubans longitudinaux (5), l'écartement à intervalles réguliers des rubans longitudinaux de manière à ouvrir une foule supérieure, l'arrêt simultané de l'avancement des fils de chaîne (2) du tissu précité et le surélèvement d'au moins un de ces fils de chaîne de manière qu'il soit situé juste en dessous d'un ruban longitudinal en position haute, l'insertion d'un fil de trame supérieur (6) à travers la foule ainsi formée, et ensuite la fermeture de la foule supérieure et l'abaissement simultané du ou des fils de chaîne surélevés susdits.

9. Procédé suivant l'une ou l'autre des revendications 7 et 8, caractérisé en ce qu'il comprend l'insertion d'au moins deux fils de trame (3) du tissu susdit entre l'insertion de deux fils de trame supérieurs successifs.

10. Procédé suivant l'une ou l'autre des revendications 8 et 9, caractérisé en ce qu'il comprend, dans la chaîne supérieure, l'agencement côte à côte des rubans longitudinaux (19, 20).

11. Procédé suivant l'une quelconque des revendications 8 à 10, caractérisé en ce qu'il comprend le surélèvement d'un fil de chaîne (11) du tissu précité en dessous de chaque ruban longitudinal qui se trouve en position haute dans la foule supérieure.

## Claims

1. Cloth, particularly fabric or felt for draining and drying paper webs in paper-manufacturing machines, comprising warp threads (2 ; 11-18) and weft threads (3 ; 21, 24 and 26, 29) woven together to form a fabric (1) with a single layer or multiple layers, characterized in that the cloth further comprises a top layer (4) formed by interlaced lengthwise strips (5 ; 19, 20) and upper weft threads (6 ; 25, 30), and part at least of an upper weft thread (6 ; 25, 30) passing underneath one or a plurality of lengthwise strips (5 ; 19, 20) is connected to said fabric by at least one warp thread (2' ; 14, 18) thereof, which is passed between said upper weft thread part and the lengthwise strip or strips.

2. Cloth as defined in claim 1, in which the spacing (D) between each upper weft thread (6 ; 25, 30), is wider than the spacing (d) between each weft thread of said fabric (1).

3. Cloth as defined in either one of claims 1 or 2, in which the lengthwise strips (5 ; 19, 20) have a width which is wider than at least the sum of the thickness of two adjacent warp threads (2 ; 11-18) and the mutual spacing thereof.

4. Cloth as defined in any one of claims 1 to 3, in which the lengthwise strips (5 ; 19, 20) are laid side by side, in such a way as to cover substantially completely the fabric (1) surface area.

5. Cloth as defined in any one of claims 1 to 4, in which the upper weft threads (25, 30) have a flattened shape, preferably with a rectangular cross-section.

6. Cloth as defined in any one of claims 1 to 5, in which each part of upper thread (6 ; 25, 30) passing underneath one or a plurality of lengthwise strips (5 ; 19, 20), is connected to said fabric (1) by a warp thread (2' ; 14, 18) thereof.

7. Method for preparing a cloth according to any one of claims 1 to 6, comprising forming a fabric (1) with a single layer or multiple layers by weaving warp threads (2 ; 11-18) and weft threads (3 ; 21-24, 26-29), characterized in that said method comprises forming simultaneously, above said fabric, a top layer (4) by interlacing lenghtwise strips (5) and upper weft threads (6), and, during the bringing-in of each upper weft thread, passing said thread underneath at least one warp thread (2) from said fabric.

8. Method for preparing cloth as defined in claim 7, which comprises forming a top warp from lenghtwise strips (5), spreading at regular intervals said lengthwise threads to open an upper shed, simultaneously stopping the feeding of the warp threads (2) from said fabric, and raising at least one said warp threads to locate same directly underneath a lengthwise strip in high position, bringing-in an upper weft thread (6) through the thus-formed shed, and thereafter closing the upper shed and simultaneously lowering said raised warp thread or threads.

9. Method as defined in either one of claims 7 or 8, which comprises bringing-in at least two weft threads (3) from said fabric between the bringing-in of two succeeding upper weft threads.

10. Method as defined in either one of claims 8 or 9, which comprises arranging side by side the lengthwise strips (19, 20) in the top warp.

11. Method as defined in any one of claims 8 to 10, which comprises raising a warp thread (11) from said fabric underneath each lengthwise strip which lies in high position in the upper shed.

## Patentansprüche

1. Tuch, insbesondere Gewebe oder Filz zum Entwässern oder Trocknen von Papierbahnen in Papiermaschinen, mit Kettfäden (2 ; 11 bis 18) und Schußfäden (3 ; 21 bis 24 und 26 bis 29), die miteinander zu einem einlagigen oder mehrlagigen Gewebe (1) verwoben sind, dadurch gekennzeichnet, daß es außerdem eine obere Schicht (4) aufweist, die aus längs gerichteten Bändern (5 ; 19, 20) und damit verwobenen oberen Schußfäden (6 ; 15, 30) besteht, und wenigstens ein Teil des oberen Schußfadens (6 ; 25, 30), der unter einem oder mehreren der längs gerichteten Bänder (5 ; 19, 20) verläuft, mit dem vorgenannten Gewebe (1) durch mindestens einen Kettfaden (2' ; 14, 18) desselben verbunden ist, der zwischen dem genannten Teil des oberen Schußfadens und dem oder den längs gerichteten Bändern hindurchgeführt ist.

2. Tuch nach Anspruch 1, dadurch gekennzeichnet, daß der Abstand (D) zwischen den oberen Schußfäden (6 ; 25, 30) größer ist als der Abstand (d) zwischen den Schußfäden des vorgenannten Gewebes (1).

3. Tuch nach dem einen oder anderen der Ansprüche 1 oder 2, dadurch gekennzeichnet, daß die längs gerichteten Bänder (5 ; 19, 20) eine Breite haben, die größer ist als wenigstens die Summe aus der Dicke zweier benachbarter Schußfäden (2 ; 11 bis 18) und ihres gegenseitigen Abstandes.

4. Tuch nach einem beliebigen der Ansprüche 1 bis 3, dadurch gekennzeichnet, daß die längs gerichteten Bänder (5 ; 19, 20) Seite an Seite angeordnet sind, so daß sie im wesentlichen die gesamte Oberfläche des Gewebes (1) bedecken.

5. Tuch nach einem beliebigen der Ansprüche 1 bis 4, dadurch gekennzeichnet, daß die oberen Schußfäden (25, 30) eine abgeflachte Form, vorzugsweise einen rechteckigen Querschnitt, aufweisen.

6. Tuch nach einem beliebigen der Ansprüche 1 bis 5, dadurch gekennzeichnet, daß jeder Teil des oberen Schußfadens (6 ; 25, 30), der unterhalb eines oder mehrerer der längs gerichteten Bänder (5 ; 19, 20) verläuft, mit dem vorgenannten Gewebe (1) durch einen Kettfaden (2' ; 14, 18) desselben verbunden ist.

7. Verfahren zum Herstellen eines Tuches nach einem beliebigen der Ansprüche 1 bis 6, bei dem durch Verweben von Kettfäden (2 ; 11 bis 18) und Schußfäden (3 ; 21 bis 24 und 26 bis 29) ein einlagiges oder mehrlagiges Gewebe (1) hergestellt wird, dadurch gekennzeichnet, daß gleichzeitig oberhalb des genannten Gewebes eine obere Schicht (4) hergestellt wird, indem längs gerichtete Bänder (5) und obere Schußfäden (6) miteinander verwoben werden und jeder obere Schußfaden beim Einführen unter wenigstens einen Kettfaden (2) des genannten Gewebes hindurchgeführt wird.

8. Verfahren zum Herstellen eines Tuches nach Anspruch 7, dadurch gekennzeichnet, daß es das Herstellen einer oberen Kette aus längs gerichteten Bändern (5), das Spreizen der längs gerichteten Bänder in regelmäßigen Intervallen zum Öffnen eines oberen Faches, das gleichzeitige Anhalten des Vorschubes der Kettfäden (2) des genannten Tuches und Anheben wenigstens eines der Kettfäden in solcher Weise, daß er sich gerade unterhalb eines angehobenen, längs gerichteten Bandes befindet, das Eintragen eines oberen Schußfadens (6) in ein derart gebildetes Fach und anschließend das Schließen des oberen Faches und gleichzeitiges Absenken des oder der oben genannten, angehobenen Kettfäden umfaßt.

9. Verfahren nach dem einen oder anderen der Ansprüche 7 und 8, dadurch gekennzeichnet, daß es das Eintragen von mindestens zwei Schußfäden (3), des oben genannten Gewebes zwischen dem Eintragen von zwei aufeinanderfolgenden oberen Schußfäden umfaßt.

10. Verfahren nach dem einen oder anderen der Ansprüche 8 und 9, dadurch gekennzeichnet, daß es in der oberen Kette die Anordnung der längs gerichteten Bänder (19, 20) Seite an Seite umfaßt.

11. Verfahren nach dem einen oder anderen der Ansprüche 8 bis 10, dadurch gekennzeichnet, daß es das Anheben eines Kettfadens (11) des oben genannten Gewebes unterhalb eines jeden der längs gerichteten Bänder umfaßt, das sich in dem oberen Fach in der oberen Stellung befindet.

0 155 712

FIG. 1

FIG. 2

FIG. 3

FIG. 4

FIG. 5  FIG. 6  FIG. 7

FIG. 8a  FIG. 9a

FIG. 8b  FIG. 9b